# FASCICULE DE BREVET EUROPEEN

(11) **EP 1 519 864 B1**
(45) Date de publication et mention de la délivrance du brevet: **26.04.2006**
(21) Numéro de dépôt: 03738082.1
(22) Date de dépôt: 24.06.2003
(51) Int. Cl.: B60T 11/26

(54) **RESERVOIR DE FLUIDE HYDRAULIQUE POUR CIRCUIT DE FREINAGE D'UN VEHICLE**
AUSGLEICHBEHÄLTER FÜR DIE HYDRAULIKFLÜSSIGKEIT DES BREMSKREISLAUFES EINES FAHRZEUGES
HYDRAULIC FLUID TANK FOR THE BRAKING CIRCUIT OF A VEHICLE

(30) Priorité: 28.06.2002 FR 0208165
(43) Date de publication de la demande: 06.04.2005
(73) Titulaire: ROBERT BOSCH GMBH, 70442 Stuttgart (DE)
(72) Inventeur: FRAISSE, Emmanuelle, F-75011 PARIS (FR); GAFFE, François, F-93110 ROSNY SOUS BOIS (FR); COME, Philippe, F-60300 SENLIS (FR)
(74) Mandataire: Hurwic, Aleksander Wiktor
(86) Numéro de dépôt international: PCT/EP2003/006629
(87) Numéro de publication internationale: WO 2004/002797

(56) Documents cités:
- DE-A- 3 724 896
- DE-C- 4 312 063
- US-B1- 6 205 783

## Description

L'invention concerne un réservoir de fluide hydraulique d'un véhicule pour un circuit de freinage. Notamment, l'invention concerne un réservoir de fluide hydraulique d'un véhicule pour un circuit électro-hydraulique de freinage ou Electro Hydraulic Brake (E.H.B.). L'invention a pour but d'améliorer une composition d'un fluide hydraulique après que ce même fluide hydraulique ait traversé le circuit électro-hydraulique de freinage. L'invention est plus particulièrement destinée au domaine de l'automobile mais peut également s'appliquer dans d'autres domaines.

Un réservoir de fluide hydraulique d'un véhicule peut alimenter un circuit électro-hydraulique de freinage ou E.H.B.. Un circuit électro-hydraulique de freinage comporte essentiellement une pompe hydraulique, un calculateur, un détecteur de déplacement d'une pédale de frein et un dispositif de freinage. La pompe hydraulique est destinée à aspirer un fluide hydraulique à partir du réservoir de fluide hydraulique. Le fluide hydraulique peut être un liquide ou bien un gaz. Cette pompe hydraulique est mise en marche à la suite d'un ordre de commande généré par le détecteur suite à l'envoi d'informations du détecteur d'un déplacement de la pédale de frein. Ce détecteur de déplacement de la pédale de frein est situé sur cette même pédale de frein. Après avoir aspiré le fluide hydraulique, la pompe hydraulique augmente en pression le fluide hydraulique et envoie le fluide hydraulique sous haute pression vers le dispositif de freinage pour freiner le véhicule: Le dispositif de freinage peut comporter au moins une roue du véhicule. Un excédent de fluide hydraulique n'ayant pas servi au dispositif de freinage, est alors envoyé dans le réservoir pour être réutilisé. Un réservoir adapté à un tel circuit de freinage est connu du document DE 43 12 063 C1.

Parallèlement à ce circuit électro-hydraulique de freinage ou EHB, un circuit hydraulique de freinage peut être mis en marche en cas de panne du circuit électro-hydraulique de freinage. Ce circuit hydraulique de freinage comporte un maître-cylindre relié à la pédale de frein. Le maître cylindre comporte depuis la pédale de frein vers le dispositif de freinage, une chambre primaire et une chambre secondaire. A l'intérieur de la chambre primaire et de la chambre secondaire coulissent un piston primaire et un piston secondaire respectivement. La chambre primaire et la chambre secondaire sont destinées à être remplies de fluide hydraulique provenant du réservoir de fluide hydraulique. Puis, le piston primaire et le piston secondaire sont destinés à se déplacer en direction du dispositif de freinage pour comprimer un volume de fluide hydraulique emprisonné dans la chambre primaire et dans la chambre secondaire respectivement du maître cylindre. Les volumes de fluide hydraulique sont emprisonnés dans la chambre primaire et dans la chambre secondaire du maître cylindre afin de générer une pression nécessaire pour engendrer le freinage du véhicule.

Lors d'un freinage normal, le circuit hydraulique de freinage peut être coupé du circuit électro-hydraulique de freinage par l'intermédiaire d'électrovalves. Une électrovalve peut être située à une sortie du maître cylindre pour empêcher le maître cylindre de fonctionner. Une autre électrovalve peut également être située à l'intérieur d'un conduit de retour de la pompe hydraulique vers le réservoir de fluide hydraulique. Cette électrovalve de retour permet de couper la communication entre la pompe hydraulique et le réservoir pour favoriser une différence de pression nécessaire pour monter en pression le fluide hydraulique plus efficacement dans le circuit électro-hydraulique de freinage.

Lors du déplacement de la pédale de frein, l'électrovalve située à la sortie du maître cylindre est destinée à couper la circulation du fluide hydraulique suite à un ordre de commande transmis par le détecteur de déplacement de la pédale de frein. Suite à un ordre de commande transmis par le détecteur de déplacement de la pédale de frein, l'électrovalve du maître cylindre ferme la communication entre le maître cylindre et le dispositif de freinage. En cas de panne du circuit électro-hydraulique de freinage, cette électrovalve reste ouverte. Une panne consiste en un dysfonctionnement d'au moins un élément du circuit électro-hydraulique de freinage. Un élément du circuit électro-hydraulique de freinage est par exemple la pompe hydraulique, le calculateur ou le détecteur de déplacement de la pédale de frein.

En restant ouverte, l'électrovalve du maître cylindre permet à un maître cylindre, suite à l'enfoncement de la pédale de frein, d'envoyer du fluide hydraulique sous pression via le réservoir de fluide hydraulique au dispositif de freinage.

Cependant, on s'est aperçu qu'au bout d'un certain temps, la pompe hydraulique s'usait précocement de manière anormale. Du fait de cette usure anormalement précoce, le circuit électro-hydraulique de freinage devenait de moins en moins fonctionnel. La pompe hydraulique devenant inefficace suite à l'ordre de commande transmis par le détecteur de déplacement de la pédale de frein, le détecteur de déplacement de la pédale de frein n'empêche plus l'électrovalve du maître cylindre de rester ouverte. L'électrovalve du maître cylindre reste alors ouverte pour permettre au maître-cylindre de prendre le relais de la pompe hydraulique. Cependant, même lorsque le maître-cylindre prend le relais de la pompe hydraulique défaillante, le freinage réalisé à la suite de la mise en marche de ce maître cylindre n'est pas aussi efficace qu'on le souhaiterait. On s'est aperçu qu'il était nécessaire d'appuyer beaucoup plus fort sur la pédale de frein afin d'engendrer le freinage souhaité.

On s'est rendu compte que le fluide hydraulique du réservoir de fluide hydraulique comportait un mélange de bulles d'air. Lorsque ce fluide hydraulique est un liquide par exemple, ces bulles d'air sont produites à la suite du retour du fluide hydraulique provenant de la pompe hydraulique dans le réservoir du fait de l'apparition d'une émulsion. On entend par émulsion la formation d'un mélange de bulles d'air dans le fluide hydraulique. Cette émulsion est le résultat d'une différence de pression entre le circuit électro-hydraulique de freinage et l'intérieur du réservoir. La pression dans le circuit électro-hydraulique de freinage est plus élevée que la pression à l'intérieur du réservoir. La différence de pression résultant crée un jet de fluide hydraulique lors du retour du fluide hydraulique dans le réservoir hydraulique. Ce jet se déverse dans le liquide déjà présent dans le réservoir entraînant alors la formation d'une émulsion. Par exemple, la pression à l'intérieur du réservoir est à 1 bar et la pression du fluide hydraulique à l'entrée du réservoir est à.2 bars environ.

La pompe hydraulique a donc tendance à pomper un volume de fluide hydraulique plus faible qu'habituellement du fait de la présence de ces bulles d'air. Pour compenser ce faible volume de fluide hydraulique pompé, la pompe hydraulique aspire alors davantage. En aspirant toujours davantage de fluide hydraulique, la pompe hydraulique a donc tendance à s'user plus rapidement qu'habituellement. En s'usant plus rapidement qu'habituellement, la pompe hydraulique peut ne plus fonctionner. Ainsi, en cas de panne, lorsque la pompe hydraulique ne fonctionne plus, le maître cylindre prend le relais et est également obligé de pomper une quantité de fluide hydraulique plus importante qu'habituellement de manière à remplir efficacement chacune des chambres primaire et secondaire du maître cylindre. Ce freinage résultant est moins efficace. Le conducteur est alors obligé d'appuyer plus fort sur la pédale de frein pour pomper davantage.

Pour résoudre le problème de formation de bulles d'air lors du retour du fluide hydraulique du circuit électro-hydraulique de freinage dans le réservoir de fluide hydraulique, l'invention prévoit de faire circuler préalablement le fluide hydraulique dans le réservoir de fluide hydraulique avant d'être réutilisé. La circulation du fluide hydraulique à l'intérieur du réservoir a pour but de laisser décanter le fluide hydraulique comportant un mélange de bulles d'air avant d'être réutilisé par la pompe hydraulique. On entend par décantation le phénomène résultant de la séparation du liquide et des bulles d'air. En se décantant, le fluide hydraulique s'appauvrit en bulles d'air au fur et à mesure du temps.

Pour ne pas perturber le fonctionnement de la pompe hydraulique de manière à ce qu'une quantité de fluide hydraulique soit toujours disponible, le réservoir est divisé en au moins deux chambres de décantation par une cloison de décantation. Cette cloison de décantation est disposée de telle manière qu'elle est fixée à deux côtés du réservoir. Cette cloison de décantation est disposée également de telle manière que les bulles d'air puissent circuler entre la cloison de décantation et le plafond du réservoir et que le fluide hydraulique puisse circuler entre la cloison et le fond du réservoir. Les bulles d'air auront tendance à se positionner à un endroit Proche du plafond du réservoir alors que le liquide aura tendance à circuler dans le fond du réservoir.

Pour récupérer le liquide dépourvu le plus possible en bulles d'air, le conduit alimentant la pompe hydraulique est, de préférence, situé à une extrémité opposée à une autre extrémité du réservoir par laquelle un excédent de liquide provenant de la pompe hydraulique se déverse.

La présente invention a principalement pour objet un réservoir de fluide hydraulique d'un véhicule destiné à alimenter un circuit électro-hydraulique de freinage et à réutiliser une partie du fluide hydraulique de ce même circuit électro-hydraulique comportant :
- un plafond muni d'un bouchon pour remplir le réservoir en fluide hydraulique,
- un fond destiné à déverser du fluide hydraulique dans le circuit électro-hydraulique de freinage, et
- une paroi latérale raccordant le plafond au fond du réservoir et un premier orifice pour alimenter le circuit électro-hydraulique et un deuxième orifice permettant le retour du liquide dans le réservoir, caractérisée en ce que le réservoir comporte au moins une cloison de décantation interposée entre le deuxième et le premier orifices reliant la paroi latérale et en ce qu'elle ménage au moins un premier passage entre le plafond et une première extrémité de ladite paroi et un deuxième passage entre le fond et une deuxième extrémité de ladite paroi.

L'invention sera mieux comprise à lecture de la description qui suit et à l'examen des figures qui l'accompagnent. Ceux-ci ne sont présentés qu'à titre indicatif et nullement limitatif de l'invention. Les figures montrent :
- Figure 1 : une représentation tridimensionnelle schématique d'un réservoir de fluide hydraulique d'un véhicule, selon l'invention;
- Figure 2 : une représentation schématique d'un circuit de freinage d'un véhicule alimenté par un réservoir de fluide hydraulique, selon l'invention ;
- Figures 3a et 3b : une coupe longitudinale et une coupe transversale d'un réservoir de fluide hydraulique, selon l'invention;
- Figure 4 : une coupe transversale d'une variante du réservoir de fluide hydraulique, selon l'invention ;
- Figures 5a et 5b : des coupes longitudinales de variantes d'un réservoir de fluide hydraulique, selon l'invention.

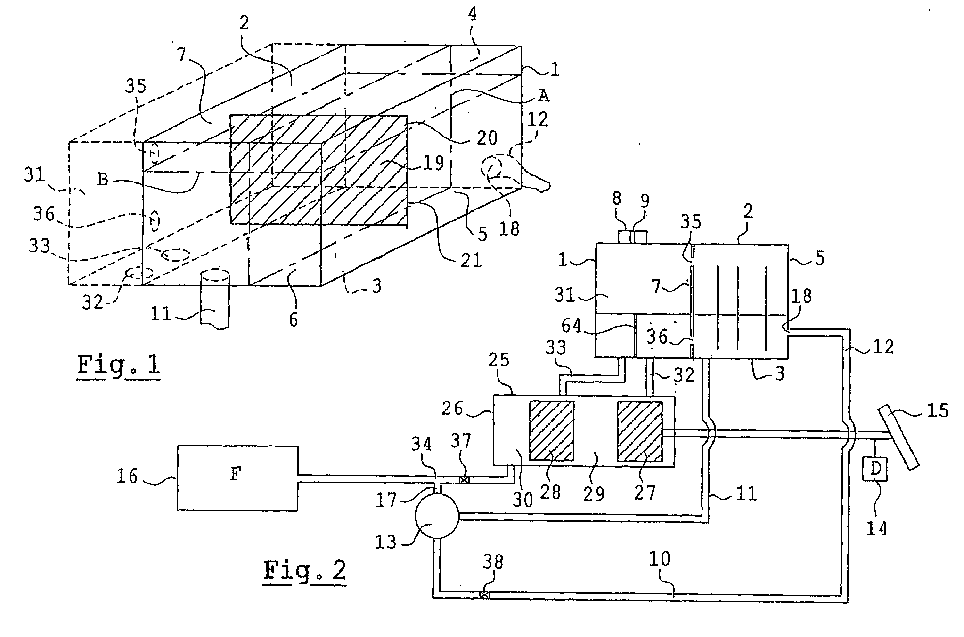

La figure 1 montre un réservoir 1 de fluide hydraulique d'un véhicule, selon l'invention. Le réservoir de fluide hydraulique comporte une forme de parallélépipède rectangulaire. Ce réservoir pourrait avoir une autre forme réalisée de telle manière que la forme du réservoir est adaptée à l'espace disponible dans un compartiment moteur (non représenté). Le réservoir comporte un plafond 2, un fond 3 et quatre cotés 4, 5, 6 et 7. Les quatre côtés sont fixés avantageusement perpendiculairement les uns à la suite des autres au plafond et au fond du réservoir.

Un plan du plafond est avantageusement parallèle à un plan du fond du réservoir de fluide hydraulique. Le plafond est muni d'un bouchon 8 pour remplir le réservoir en fluide hydraulique, figure 2. Ce bouchon est percé d'un trou 9 ou mise à l'air pour favoriser le déplacement d'un volume de fluide hydraulique à l'intérieur du réservoir de fluide hydraulique vers un circuit électro-hydraulique de freinage 10. Le fond du réservoir est destiné à déverser du fluide hydraulique dans le circuit électro-hydraulique de freinage 10. Le fond du réservoir peut en effet déboucher un premier conduit 11 pour alimenter le circuit électro-hydraulique de freinage, figures 1 et 2. Un excédent de fluide hydraulique peut revenir par un deuxième conduit de retour 12 dans le réservoir.

Le circuit électro-hydraulique de freinage 10 comporte une pompe hydraulique 13 et un détecteur 14 de déplacement d'une pédale de frein 15, figure 2. La pompe hydraulique peut être située entre le réservoir de fluide hydraulique et un dispositif de freinage 16. Le dispositif de freinage comporte au moins une roue du véhicule (non représentée). Le détecteur 14 de déplacement de la pédale de frein peut être placé sur la pédale de frein. Lors d'un freinage du véhicule et à la suite de la détection d'un déplacement de la pédale de frein, le détecteur de déplacement de la pédale de frein indique à la pompe hydraulique par un ordre de commande d'aspirer un volume de fluide hydraulique provenant du réservoir de fluide hydraulique. Le fluide hydraulique se dirige alors vers la pompe hydraulique à travers le premier conduit 11. Une fois aspiré, ce fluide hydraulique est monté sous haute pression par la pompe hydraulique. Sous haute pression, ce fluide hydraulique est destiné à circuler à travers le dispositif de freinage 16 par un conduit 17 pour provoquer le freinage d'au moins une roue du véhicule. Dans un exemple, la pression fournie par cette pompe hydraulique est de 200 bars. Un excédent de volume de fluide hydraulique n'ayant pas servie au freinage du véhicule est alors acheminé en direction du réservoir. L'excédent de volume de fluide hydraulique est acheminé par le deuxième conduit de retour 12 débouchant dans le réservoir par un premier orifice d'entrée 18. L'excédent de volume de fluide hydraulique est à une pression inférieure à la pression fournie par la pompe hydraulique. Dans un exemple, la pression de cet excédent de volume de fluide hydraulique est de 2 bars. Le fluide hydraulique peut ainsi être à nouveau utilisé.

Selon l'invention, le réservoir destiné à alimenter le circuit électro-hydraulique de freinage 10 comporte au moins une cloison de décantation 19 reliée à deux côtés du réservoir, figure 1. La cloison de décantation 19 est représentée par un rectangle hachuré sur la figure 1. Plus particulièrement, la cloison de décantation est reliée à deux côtés du réservoir avantageusement parallèles entre eux. Bien entendu, on entend également par côté du réservoir une paroi de séparation disposée dans le réservoir. Dans l'exemple figure 1, les côtés du réservoir sur lesquels peut être fixée la cloison de décantation sont les côtés 5 et 7.

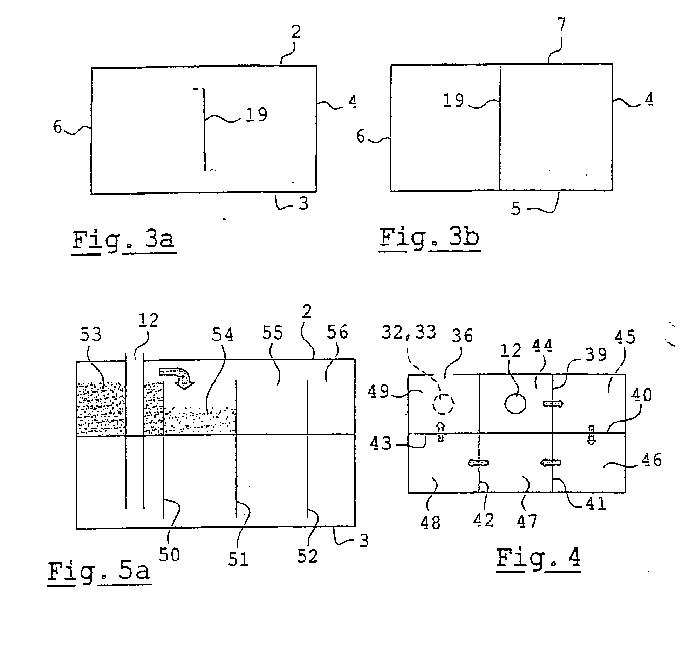

La cloison de décantation délimite une partie supérieure 20 proche du plafond et une partie inférieure 21 éloignée du plafond, figure 1. La figure 3a représente une coupe longitudinale de ce réservoir de décantation selon une section A du réservoir de décantation représenté figure 1. Selon cette section A de ce même réservoir de fluide hydraulique, on peut visualiser un emplacement de la cloison de décantation par rapport au plafond et au fond du réservoir de fluide hydraulique.

La figure 3b représente une coupe transversale du réservoir de fluide hydraulique représenté figure 1, selon une section B. Selon cette coupe transversale, la cloison de décantation est destinée à se fixer préférentiellement à deux cotés parallèles du réservoir. D'autre part, la cloison de décantation 19 est fixée à deux côtés du réservoir perpendiculairement à leur surface.

Le circuit de freinage comporte également un circuit hydraulique de freinage de sécurité 25 fonctionnant lorsque le circuit électro-hydraulique de freinage 10 est en panne. Ce circuit hydraulique de freinage comporte un maître cylindre 26 destiné à alimenter le dispositif de freinage 16 en cas de panne du circuit électro-hydraulique de freinage 10. Ce maître cylindre comporte depuis la pédale de frein jusqu'à au moins une roue du véhicule, un piston primaire 27 et un piston secondaire 28 destinés à coulisser dans une chambre primaire 29 et dans une chambre secondaire 30 respectivement. La chambre primaire et la chambre secondaire sont destinées à être remplies en fluide hydraulique. Ce fluide hydraulique provient du réservoir de fluide hydraulique. Le réservoir de fluide hydraulique peut d'ailleurs comporter un compartiment 31 spécifiquement destiné à alimenter ce circuit hydraulique de freinage. Ce compartiment 31 est représenté figure 2 et est représenté par des traits en pointillés figure 1. Ce compartiment 31 est avantageusement divisé en deux chambres pour des raisons de sécurité par une cloison de sécurité 64, figue 2. Cette cloison de sécurité 64 peut être, par exemple, fixée uniquement sur le fond 3 du réservoir en s'étendant perpendiculairement en direction du plafond 2. Ce compartiment 31 alimente la chambre primaire et la chambre secondaire du maître cylindre à travers un troisième conduit 32 et à travers un quatrième conduit 33. Ces conduits prennent naissance à partir du fond du réservoir. Le volume de fluide hydraulique, réparti dans chacune des chambres primaire et secondaire, est ensuite amené à être comprimé par le déplacement du piston primaire et du piston secondaire l'un à la suite de l'autre en direction du dispositif de freinage et à la suite du déplacement de la pédale de frein. Le fluide hydraulique monte en pression et est dirigé vers le dispositif de freinage à travers un conduit 34 rejoignant le conduit 17. La pression est alors répercutée dans le dispositif de freinage 16 pour freiner le véhicule.

Le volume minimum de fluide hydraulique nécessaire à l'intérieur du réservoir de fluide hydraulique pour alimenter le circuit hydraulique de freinage 25 de sécurité correspond ainsi à un volume nécessaire pour remplir la chambre primaire et la chambre secondaire du maître cylindre.

Ce compartiment 31 peut communiquer avec le reste du réservoir par l'un des quatre côtés précédemment mentionnés par l'intermédiaire d'un deuxième orifice 35 et d'un troisième orifice 36, figures 1 et 2. Le deuxième orifice 35 est placé à proximité du plafond et le troisième orifice 36 est éloigné du plafond. Ces orifices 35 et 36 permettent la communication en air et en liquide respectivement avec le reste du réservoir. Par exemple, ces orifices 35 et 36 sont placés sur le côté 7 du réservoir, figure 1.

Des électrovalves peuvent être disposées dans des conduits du circuit hydraulique. Notamment, une première électrovalve 37 peut être disposée dans le conduit 34 à une sortie du maître cylindre entre le maître cylindre et le dispositif de freinage. La mise en marche du circuit hydraulique de freinage est d'ailleurs étroitement associée au comportement de cette première électrovalve 37. En position de repos du véhicule, cette première électrovalve est ouverte. Lorsque le véhicule est en position de freinage, la première électrovalve est amenée à se fermer coupant la communication du maître cylindre avec le dispositif de freinage pour permettre au fluide hydraulique de circuler dans le circuit électro-hydraulique de freinage. En cas de panne de ce circuit électro-hydraulique de freinage, la première électrovalve 37 reste ouverte permettant alors au circuit hydraulique de freinage 25 de prendre le relais pour freiner le véhicule.

Une deuxième électrovalve 38 peut être placée dans le deuxième conduit 12 à une sortie de la pompe hydraulique. Cette deuxième électrovalve 38 permet de couper la communication entre la pompe hydraulique et le réservoir pour maintenir au maximum une différence de pression entre le circuit électro-hydraulique et le réservoir. Une fois que la pompe hydraulique a expulsé le liquide en direction du dispositif de freinage, l'excédent de volume de fluide hydraulique est alors dirigé vers le réservoir suite à l'ouverture de la deuxième électrovalve 38.

Le réservoir comporte, de préférence, trois à six cloisons de décantation. Dans un exemple figure 4, le réservoir comporte cinq cloisons de décantation 39, 40, 41, 42 et 43. Ces cinq cloisons de décantation délimitent six chambres de décantation 44, 45, 46, 47, 48 et 49.

Les cloisons de décantation sont disposées de telle manière que le liquide peut circuler d'une chambre de décantation à une autre chambre de décantation en passant entre la partie inférieure de la cloison de décantation et le fond du réservoir. La circulation du fluide hydraulique est représentée figure 4 par des flèches. Le fluide hydraulique circule depuis la première cloison de décantation 44 jusqu'à la dernière chambre de décantation 49 en passant entre chacune des cloisons 39, 40, 41, 42 et 43.

Lors du fonctionnement du circuit électro-hydraulique de freinage, l'excédent de fluide hydraulique n'ayant pas servi à la pompe hydraulique, se déverse dans le réservoir par le conduit de retour 12 avec une certaine pression. Par exemple, le liquide se déverse à une pression de 2 bars alors que le réservoir est à la pression atmosphérique de 1 bar. Le réservoir est la pression atmosphérique du fait de la mise à l'air 9. Cette différence de pression entraîne un jet du fluide hydraulique à un endroit correspondant à l'orifice 18 se déversant dans le réservoir. Ce jet de liquide à une certaine pression entraîne une émulsion du liquide présent dans le réservoir. On entend par émulsion, la formation de bulles d'air dans le fluide hydraulique. C'est pourquoi, l'orifice d'entrée 18 peut être placé préférentiellement à proximité du fond du réservoir et à un endroit du réservoir où se situe le fluide hydraulique. En se plaçant dans le liquide, l'orifice 18 permet au jet de créer moins de bulles d'air dans le liquide.

Chaque chambre de décantation formée par la cloison de décantation selon l'invention permet au fluide hydraulique de se décanter. Il est possible de visualiser schématiquement la décantation du fluide hydraulique, figure 5a. La figure 5a représente une coupe longitudinale d'un réservoir de fluide hydraulique comportant au moins trois cloisons de décantation 50, 51 et 52 et quatre chambres de décantation 53, 54, 55 et 56. Comme précédemment mentionné, par décantation on entend le phénomène permettant au liquide de se débarrasser de ses bulles d'air lors de la remontée à la surface des bulles d'air.

Ainsi, dans une première chambre de décantation 53, les bulles d'air s'accumulent à la surface du fluide hydraulique entre le plafond et la surface du liquide correspondant à un niveau de fluide hydraulique. Le liquide se décante et les bulles remontent à la surface du fluide hydraulique. Le fluide hydraulique peut circuler d'une chambre de décantation à une autre chambre de décantation en passant entre la partie inférieure de chaque cloison de décantation et le fond du réservoir.

Une mousse se formant à la surface du fluide hydraulique peut remplir l'espace formé par la première chambre de décantation 53, figure 5a. On entend par mousse une concentration élevée de bulles d'air présente à proximité de la surface du fluide hydraulique. La surface du fluide hydraulique correspond à un niveau de fluide hydraulique dans le réservoir. Dans ce cas, la mousse peut déborder de cette première chambre de décantation et passer dans la deuxième chambre de décantation 54 en passant entre la partie supérieure de la cloison de décantation 50 et le plafond du réservoir. Ce passage de la mousse depuis la première chambre de décantation 53 vers la deuxième chambre de décantation 54 est représenté par une flèche figure 5a.

Ainsi, le premier conduit destiné à alimenter le circuit électro-hydraulique de freinage est placé, de préférence, dans la dernière chambre de décantation 56. C'est dans cette dernière chambre de décantation qu'il y a le moins de bulles d'air.

En passant de chambre de décantation en chambre de décantation, le fluide hydraulique peut s'appauvrir en bulles d'air du fait que les bulles d'air remontent à la surface du liquide.

La dernière chambre de décantation 56 peut d'ailleurs communiquer préférentiellement avec le compartiment 31 destiné à alimenter le circuit hydraulique de freinage par l'orifice 36. Cette chambre de décantation 56 permet notamment de déverser un fluide hydraulique théoriquement le plus dépourvu de bulles d'air.

## Revendications

1. Réservoir de fluide hydraulique (1) d'un véhicule destiné à alimenter un circuit électro-hydraulique de freinage (10) et à réutiliser une partie du fluide hydraulique de ce même circuit électro-hydraulique comportant :
- un plafond (2) muni d'un bouchon (8) pour remplir le réservoir en fluide hydraulique,
- un fond (3) destiné à déverser du fluide hydraulique dans le circuit électro-hydraulique de freinage, et
- une paroi latérale raccordant le plafond au fond du réservoir et un premier orifice (11) pour alimenter le circuit électro-hydraulique et un deuxième orifice (12) permettant le retour du liquide dans le réservoir, **caractérisé en ce que** le réservoir comporte au moins une cloison de décantation (19) interposée entre le deuxième et le premier orifices reliant la paroi latérale et **en ce qu'**elle ménage au moins un premier passage entre le plafond et une première extrémité de ladite paroi et un deuxième passage entre le fond et une deuxième extrémité de ladite paroi.

2. Réservoir de fluide hydraulique selon l'une des revendications 1 à 2 **caractérisé en ce que** la cloison de décantation est fixée à deux côtés du réservoir.

3. Réservoir de fluide hydraulique selon la revendication 1 **caractérisé en ce que** la paroi latérale du réservoir comporte quatre côtés et **en ce que** la cloison de décantation est fixée à deux desdits côtés du réservoir parallèles entre eux.

4. Réservoir de fluide hydraulique selon l'une des revendications 1 à 3 **caractérisé en ce que** le réservoir comporte, trois à six cloisons de décantations, ou plus.

5. Réservoir selon l'une quelconque des revendications précédentes **caractérisé en ce que** ledit réservoir est mitoyen avec un réservoir (31) d'alimentation d'un maître cylindre et **en ce qu'**il comporte des passages (35, 36) de communication avec ledit réservoir d'alimentation du maître-cylindre.

6. Réservoir selon la revendication 5 **caractérisé en ce que** les passages (35, 36) sont formés par au moins un troisième (35) et quatrième (36) orifices, placés respectivement à proximité du plafond et éloigné du plafond.

## Claims

1. A vehicle hydraulic fluid tank (1) for feeding an electro-hydraulic brake circuit (10) and for reusing a fraction of the hydraulic fluid of said electro-hydraulic brake circuit, the tank comprising:
. a ceiling (2) provided with a stopper (8) for filling the tank with hydraulic fluid;
. a bottom (3) for delivering hydraulic fluid into the electro-hydraulic brake circuit; and
. a side wall connecting the ceiling to the bottom of the tank and a first orifice (11) for feeding the electro-hydraulic circuit and a second orifice (12) for allowing liquid to return into the tank, the tank being **characterized in that** it includes at least one settling partition (19) interposed between the second and first orifices joining the side wall, and **in that** it provides at least a first passage between the ceiling and a first end of said wall and a second passage between the bottom and a second end of said wall.

2. A hydraulic fluid tank according to claim 1, **characterized in that** the settling partition is fixed to two sides of the tank.

3. A hydraulic fluid tank according to claim 1, **characterized in that** the side wall of the tank comprises four sides and **in that** the settling partition is fixed to two of said sides of the tank that are parallel to each other.

4. A hydraulic fluid tank according to any one of claims 1 to 3, **characterized in that** the tank comprises three to six settling partitions, or more.

5. A tank according to any preceding claim, **characterized in that** said tank shares a wall with a tank (31) for feeding a master cylinder, and **in that** it includes passages (35, 36) communicating with said tank for feeding the master cylinder.

6. A tank according to claim 5, **characterized in that** the passages (35, 36) are formed by at least a third orifice (35) and a fourth orifice (36), placed respectively close to the ceiling and remote from the ceiling.

## Patentansprüche

1. Hydraulikfluidbehälter (1) eines Fahrzeugs, der dazu bestimmt ist, einen elektro-hydraulischen Bremskreis (10) zu speisen und einen Teil des Hydraulikfluids aus diesem elektro-hydraulischen Kreis erneut zu verwenden, wobei er folgendes aufweist:
- eine Decke (2), die mit einem Stopfen (8) zum Füllen des Behälters mit Hydraulikfluid versehen ist,
- einen Boden (3), der dazu bestimmt ist, Hydraulikfluid in den elektro-hydraulischen Bremskreis abzugeben, und
- eine Seitenwand, welche die Decke mit dem Boden des Behälters verbindet, eine erste Öffnung (11) zur Speisung des elektro-hydraulischen Kreises sowie eine zweite Öffnung (12), die das Zurückfließen der Flüssigkeit in den Behälter ermöglicht, **dadurch gekennzeichnet, dass** der Behälter mindestens eine Absetztrennwand (19) aufweist, die zwischen der zweiten und der ersten Öffnung angeordnet ist, wobei die Seitenwand verbunden wird, und dass sie mindestens einen ersten Durchgang zwischen der Decke und einem ersten Ende der Wand sowie einen zweiten Durchgang zwischen dem Boden und einem zweiten Ende der Wand ausbildet.

2. Hydraulikfluidbehälter nach Anspruch 1, **dadurch gekennzeichnet, dass** die Absetztrennwand an zweiten Seiten des Behälters befestigt ist.

3. Hydraulikfluidbehälter nach Anspruch 1, **dadurch gekennzeichnet, dass** die Seitenwand des Behälters vier Seiten aufweist und dass die Absetztrennwand an zwei zueinander parallelen Seiten des Behälters befestigt ist.

4. Hydraulikfluidbehälter nach einem der Ansprüche 1 bis 3, **dadurch gekennzeichnet, dass** der Behälter drei bis sechs oder mehr Absetztrennwände aufweist.

5. Behälter nach einem der vorhergehenden Ansprüche, **dadurch gekennzeichnet, dass** der Behälter an einen Behälter (31) zur Speisung eines Hauptzylinders angrenzt und dass er Durchgänge (35, 36) zur Verbindung mit dem Behälter zur Speisung des Hauptzylinders aufweist.

6. Behälter nach Anspruch 5, **dadurch gekennzeichnet, dass** die Durchgänge (35, 36) durch mindestens eine dritte (35) und eine vierte Öffnung (36) gebildet sind, die in der Nähe der Decke bzw. von der Decke beabstandet angeordnet sind.
